(19) Europäisches Patentamt
European Patent Office
Office européen des brevets

(11) EP 1 917 271 B1

(12) **EUROPEAN PATENT SPECIFICATION**

(45) Date of publication and mention of the grant of the patent:
**07.11.2012 Bulletin 2012/45**

(21) Application number: **06801455.4**

(22) Date of filing: **15.08.2006**

(51) Int Cl.:
***C07F 5/02*** *(2006.01)* ***A61B 5/00*** *(2006.01)*
***B82Y 15/00*** *(2011.01)* ***B82Y 30/00*** *(2011.01)*

(86) International application number:
**PCT/US2006/031698**

(87) International publication number:
**WO 2007/022112 (22.02.2007 Gazette 2007/08)**

(54) **A MICROOPTIC GLUCOSE DETECTOR**
MIKROOPTISCHER GLUCOSEDETEKTOR
DETECTEUR DE GLUCOSE MICRO-OPTIQUE

(84) Designated Contracting States:
**DE FR GB**

(30) Priority: **15.08.2005 US 204587**

(43) Date of publication of application:
**07.05.2008 Bulletin 2008/19**

(73) Proprietor: **Honeywell International Inc.**
**Morristown, NJ 07960 (US)**

(72) Inventors:
- **GU, Yuandong**
**Plymouth, MN 55447 (US)**
- **ZHANG, Chunbo**
**Plymouth, MN 55442 (US)**

(74) Representative: **Chamberlain, Alan James et al**
**Haseltine Lake LLP**
**Redcliff Quay**
**120 Redcliff Street**
**Bristol BS1 6HU (GB)**

(56) References cited:
**WO-A2-2005/065241** **US-A1- 2002 193 672**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 917 271 B1

## Description

### FIELD OF THE INVENTION

The present invention relates to a novel fluorescent compound, and particularly, to a novel fluorescent compound suitable for use in the detection of saccharides or sugars, such as glucose, to a novel method of saccharide detection with such fluorescent compound, and to a novel fully-integrated fluorescence detection microsystem.

### BACKGROUND OF THE INVENTION

Numerous assay methods have been developed for the detection and quantitative determination of analytes contained in biological samples. A substantial portion of the assay methods currently used relies on specific binding reactions between analytes and assay reagents. The analytes may be large complex molecules, such as proteins, viruses, viral antigens, bacterial cells, cell surface receptors, enzymes, hormones, polysaccharides, glycoproteins, lipoproteins, or small haptenic molecules, such as peptides, certain hormones, therapeutic drugs, and drugs of abuse, to name a few.

Binding assays are divided into two major groups based on their format: homogeneous and heterogeneous assays. Homogeneous assays are based on a single-phase reaction between analyte and assay reagents. Heterogeneous assays typically involve binding of an analyte contained in the liquid sample to assay reagents, which are attached to a solid support. Various materials have been used as support surfaces, including glass rods, glass beads, silica impregnated strips, glass fiber, and microparticles.

Dyes in general, and fluorescent dyes in particular, are commonly utilized in both homogeneous and heterogeneous binding assays to provide a detectable signal. However, an accurate detection of fluorescent signals produced by analytes bound to the labels is often hindered by a high and variable background owing to the fluorescence of the biological sample itself.

Liquid flow cytometry helps to overcome this problem. In flow cytometry, labeled particles with bound analyte are passed through a laser beam. The emitted fluorescent signals of the particles are measured and correlated to the presence and quantity of the analyte. The main advantage of this method is its capability for accurate detection and measurement of the fluorescent signals associated with the bound analyte in the presence of other unbound constituents of the sample.

Saccharides represent an important group of biochemical analytes.

Current methods for determining their concentrations in a sample typically rely on enzymatic assays. Although enzymatic assays have proven to be reliable, they must utilize rather unstable enzymes, which become exhausted in the presence of their substrates. Additionally, conventional enzymatic assay methods cannot be utilized in a convenient flow cytometry format. Particle-based assays, such as the ones used in flow cytometry, require a signal change confined to the particle. Normal enzymatic analysis methods use freely diffusable intermediates that violate this requirement.

Determination of saccharides is particularly important in clinical settings. Treatment of diabetes and hypoglycemia requires frequent measurement of tissue glucose concentration. This is commonly accomplished by drawing a small blood sample (as by a finger prick) several times daily. A patient typically uses a scalpel to draw a droplet of blood and applies the droplet to a reagent strip which is read in a small meter. This process is painful, invasive, and time-consuming.

WO 2005/065241 describes small molecule metabolite reporters (SMMRs) for use as in vivo glucose biosensors, sensor compositions. The SMRs include boronic acid-containing small molecules which are used for monitoring glucose *in vivo*, advantageously on the skin.

US 2002/0193672 describes fluorescent biosensor molecules, fluorescent biosensors and systems which are particularly well-suited for detecting and measuring in-vivo glucose concentrations.

A more recent approach involves implantation of sensor particles capable of generating a detectable analyte signal in response to the analyte concentration in the body. The proposed method is less intrusive than the conventional finger prick technique for measuring blood D-glucose. It requires only periodic replacement of the sensor particles in the skin.

The sensor particles typically comprise fluorescence sensors either attached to the surface of the particles or incorporated into the body of the particles. The sensors are specific to the target analyte. The binding of the sensor to the analyte generates a detectable signal that is responsive to the concentration of the analyte. When the analyte is glucose, boronic acid or diboronic acids conjugated to fluorophores have been used. A typical example is shown in Scheme 1:

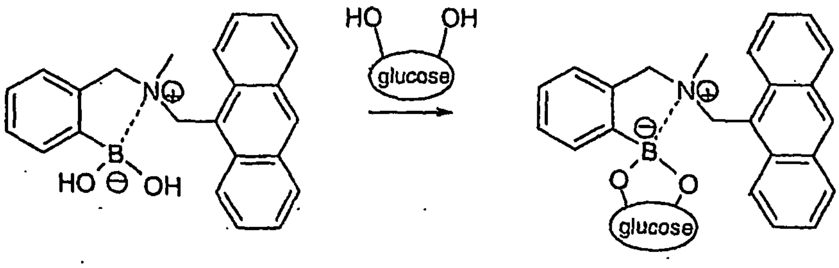

Nonfluorescent Fluorescent

Scheme 1

Phenylboronic acids (PBAs) have been immobilized on the surface of transducers for use in sugar sensors. For example, carbon and metal electrodes have been modified with PBA-containing polymers such as poly(acrylate), poly(aniline), and poly(pyrrole). Self-assembled monolayers of PBAs have also been used for developing sensitive and selective electrochemical and optical sugar sensors, but they have not heretofore been used in a large-scale fluorescence detection unit or in a fluorescent detection microsystem. Because of the importance of obtaining accurate glucose readings to the well-being of a diabetic patient, it would be highly desirable to have an accurate method for testing for glucose employing a PET-type fluorescent compound and a fluorescence detection system. In addition, it would be highly desirable to have a miniaturized fluorescence detection system that would permit a diabetic patient to monitor his or her own glucose levels.

## SUMMARY OF THE INVENTION

The present invention is defined in and by the appended claims.

The present invention uses compounds of formula I that form a self-assembled monolayer on a gold surface and that fluoresce in the presence of saccharides:

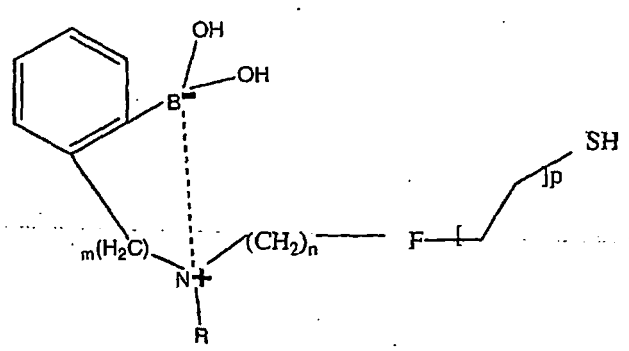

(I)

wherein F designates a fluorophore, R is : an allyl group having 1 to 4 carboratous or an aromatic group, n and m are each 0, 1, or 2, n+m is the integer 2 or 3, p is an integer of 1 to about 30, and the moieties $[CH_2CH_2]_p$ and the benzene ring attached to the boron atom are substituted or unsubstituted.

The present invention further provides an integrated microfluidic fluorescence detection system for detecting an analyte, which system comprises: a light source; a self-assembled monolayer coated on a gold surface, wherein the self-assembled monolayer comprises fluorophores that fluoresce in the presence of the analyte; a light processor; and a detector; wherein a compound of formula I forms the self-assembled monolayer on the gold surface,

The present invention also provides a method of detecting the presence of or the amount of a saccharide in a biological sample using the microfluidic fluorescence detection system. In one embodiment, a diabetic patient can monitor his or her own glucose levels using the microfluidic fluorescence detection system of the present invention.

## BRIEF DESCRIPTION OF THE DRAWINGS

FIG. 1 and FIG. 2 are a synthetic scheme for the preparation of the compound of formula II.

FIG. 3 is a schematic view of the inventive micromachined fluorescent saccharide detector.

FIG. 4 is a schematic view of the inventive micromachined fluorescent saccharide detector showing micro/minifluidic channels beneath the surface of the monlayer.

FIG. 5 is a schematic view of a microdischarge light source.

FIG. 6 is a schematic view of a light processor equipped with a blazed grating.

FIG. 7 is an illustration of a transmission blazed grating, including the parameters required for calculating the direction of diffracted light through a grating.

DETAILED DESCRIPTION OF THE INTENTION

The present invention uses a novel saccharide sensing and binding compound which forms a self-assembled monolayer on a gold surface. The saccharide-sensing gold construct thus formed may be implanted with minor surgery into a patient or used in a fluorescence detection system for detection of saccharides. The present invention also provides a fully-integrated microfluidic system for fluorescence detection.

Definitions

The following definitions are used unless otherwise described:

As used herein, the term "self-assembled monolayer" (SAM) means a uni-directional layer formed on a solid surface by spontaneous organization of molecules. One example is the organization of thiol compounds on gold.

As used herein, the term "fluorophore" means a compound or group that fluoresces when exposed to and excited by a light source, such as visible or infrared light.

As used herein, the term "patient" as used herein refers to any animal, including mammals, preferably mice, rats, other rodents, rabbits, dogs, cats, swine, cattle, sheep, horses, or primates, and most preferably humans, that currently is presenting or is at risk of presenting detectable glucose in the blood or urine. The term may specify male or female or both, or exclude male or female.

The novel saccharide sensing and binding compounds used in the present invention have the following formula I:

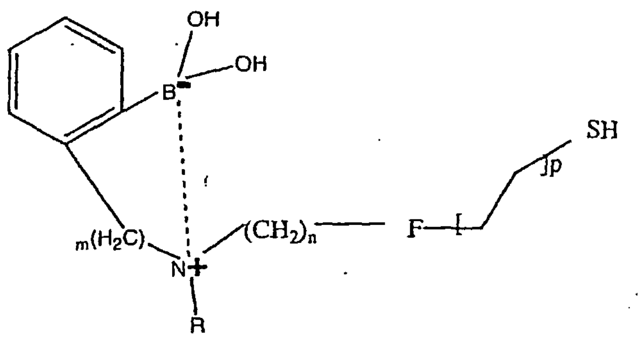

(I)

(I) wherein F designates a fluorophore, R is an alkyl group having 1 to 4 carbon atoms or an aromatic group, n and m are each 0, 1, or 2, n+m is the integer 2 or 3, and p is an integer of 1 to about 30. Preferably, p is at least 12, and more preferably p is at least 15. The group $[CH_2CH_2]_p$ may be unsubstituted or substituted with substituents that do not affect fluorescence adversely. The compounds of formula I fluoresce in the presence of saccharides via a photoinduced electron transfer (PET) mechanism. The fluorescent intensity of the sensor changes in response to photoinduced electron transfer between the amine group and the fluorophore as modulated by the binding of saccharide hydroxyls to the boronic acid. In the absence of saccharide binding, the fluorescence by the fluorescent group is quenched by the unshared electron pair of the nitrogen atom. When glucose, for example, is bound, the unshared electron pair is utilized in the bond formation and does not participate in fluorescence-quenching. The formation of a boronate ester between boronic acid and glucose increases the Lewis acidity of boronic acid, decreases PET, and the intrinsic fluorescence of the sensor is reignited.

In the above formula I, the fluorophore (F) includes a number of atoms or groups containing $\pi$-electron systems. Preferred fluorophores include naphtyl, anthryl, pyrenyl, and phenanthryl groups. The most preferred fluorophore is anthryl. The fluorophore-forming atoms or groups are optionally substituted as long as the substituent(s) do not adversely affect the fluorescence.

In formula I, the R group attached to the nitrogen atom denotes an alkyl group having 1 to 4 carbon atoms, i.e.

methyl, ethyl, propyl, or butyl, or an aromatic group, referably a phenyl group.

In formula I, m is 0, 1, or 2. Thus, the nitrogen atom in the compound used in the present invention is disposed in the vicinity of the boronic acid moiety and the nitrogen atom is attached through a methylene group or an ethylene group, or is attached directly at the ortho position of the phenylboronic acid. Preferably m is 1, and thus the nitrogen is attached to the benzene ring via a methylene group. In formula I, n is also 0, 1, or 2, and n+m is the integer 2 or 3. Thus the nitrogen atom and the boronic acid are positioned proximate to the fluorophore. Preferably, n is 1.

The benzene ring attached to the boron atom of the phenylboronic acid may be substituted with an appropriate substituent or substituents as long as such substitution does not adversely affect the fluorescence. Examples of suitable substituents include methyl, ethyl, propyl, butyl, phenyl, methoxy, ethoxy, butoxy, and phenoxy groups.

The compound used in the present invention as expressed by formula I contains a fluorophore in its molecular structure but does not emit fluorescence in the absence of saccharides. It is understood this is because the fluorescence of the fluorophore is quenched by the unshared electron pair of the nitrogen atom; the electron of the nitrogen occupies the lowest excited singlet energy state of the fluorophore so as to suppress the fluorescence. However, the compound used in the present invention emits fluorescence of a high intensity upon binding to saccharides. This phenomenon may be accounted for as follows: the presence of saccharides produces a bond between the nitrogen atom(N) and the boron atom(B) to form a strong complex of the saccharide with the phenylboronic acid compound of the present invention, where the electron-deficient boron atom has been bound to the electron rich nitrogen. Thus, the unshared electron pair of the nitrogen atom has been utilized for bonding with the boron atom and will not contribute to the fluorescence-quenching electrogen transfer process, thereby expressing the intrinsic fluorescence of the compound.

Preferred compounds falling within formula I of the present invention are the compounds of formula II, where F (the fluorophore) is anthryl, R is methyl, n and m are each 1, and p is an integer of 12 to about 30. Most preferably, p is an integer of 15 to about 30.

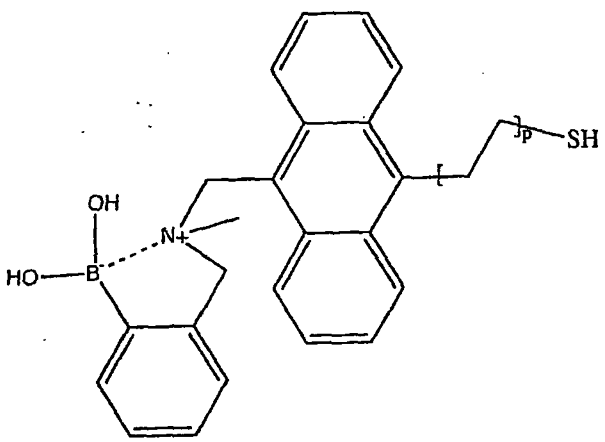

(II)

The compounds of formula II exhibit fluorescence of a highly increased intensity in the presence of monosaccharides, such as D-glucose and D-fructose. Therefore, the compounds are suitable for use in the detection of monosaccharides in general or a specific monosaccharide in particular. In the detection of a specific monosaccharide from a sample which may contain plural monosaccharides, the sample is generally subject to a pretreatment (e.g. a chromatography) for the separation of the monosaccharides, followed by the detection with the fluorescent compound used in the present invention. In addition, the amount of monosaccharide analyte in the sample may be determined from the intensity of the fluorescence by methods known in the art.

The compounds used in the present invention form a self-assembled monolayer on a gold surface. The thiol groups of the compounds adsorb readily to the gold surface, thereby forming a monolayer comprising free phenylboronic acid moieties that act as saccharide binding sites. The thiols are adsorbed from a low-concentration solution thereof, preferably 0.5 - 2.5 mM, most preferably 1-2 mM. Suitable solvents include methanol, ethanol, and tetrahydrofuran (THF). The quality of the SAM is dependent upon the adsorption time. Suitable absorption times range from about 12 hours to two or three days. Longer absorption times are preferable for forming the highest quality SAMs.

The gold surface suitably is formed as a thin film onto a substrate. Suitable substrate materials are those with good transmission of infrared, visible, and/or ultraviolet light. Preferred materials include glass, silicon, carbon nanotubes, or polymeric substrates, such as polydimethylsiloxane (PDMS). Single crystal substrates may also be used. The preferred crystal face for preparing SAMs with the thiols of the present invention is the (111) direction. The substrate may be flat, concave, or convex. Flat substrates are preferred. The size of the substrate may vary depending on how the finished construct will be used, e.g., as a surgical implant, in a large-scale fluorescence detection unit, or in a fluorescent detection

microsystem. Suitable small flat glass substrates include microscope glass coverslips, such as those marketed under the trademarks Goldseal® or Superslip®.

Owing to the PET mechanism, in the absence of saccharide, the gold surface will not fluoresce; in the presence of saccharide, the gold surface will fluoresce. The PET property of the compounds used in the present invention may vary depending upon the length of the alkylene chain attached to the thiol group.

The gold construct may be implanted surgically into a patient for continuous monitoring of glucose levels. The fluorescence signal produced in the presence of glucose is then measured by optical means. If glucose is to be detected in an *in vitro* sample, i.e. a sample taken out of the living body of a patient, the fluorescence may be detected using a large-scale fluorescence detection unit or using a fluorescent detection microsystem, which also forms part of the present invention.

FIG. 3 and FIG. 4 are schematic views of examples of the inventive microsystem. The fluorescent detection microsystem of the present invention is an integrated microfluidic system which comprises four major components assembled into a portable device:

> (1) a light source **2** (LS) for fluorescent excitation; (2) a self-assembled monolayer coated on a gold surface **1** for saccharide binding and fluorescent detection, as described hereinabove; (3) a light processor 3 (LP) for isolating the excited fluorescence from the excitation light and expanding the fluorescence into a spectrum spatially; and (4) a detector **4** (DET) for light intensity measurement. Components (1)-(3) are produced individually using microfabrication technologies. The four components may be arranged in a plurality of different geometries. Thus, for example, FIG. 3 shows light source **2** positioned adjacent to light processor **3** whereas FIG. 4 shows light source **2** positioned beneath light processor **3**.

In operation, a bio-fluid containing or potentially containing glucose is delivered to the monolayer surface via micro/mini channels **7** situated beneath the monolayer surface, as illustrated in FIG. 4. The monolayer-micro/mini channel assembly is equipped with an injection port **6** that is connected to the micro/mini channels and permits injection of liquid samples into the micro/mini channels. Injection port **6** may be located at any convenient location on the monolayer. A pumping means is used to impel the bio-fluid through the micro/mini channels. Suitable pumping means include an external pump or actuation electrodes affixed to the monolayer. The actuation electrodes may be located at any convenient location on the monolayer to generate driving force in the bio-fluid. An example of a monolayer-micro/mini channel assembly equipped with actuation electrodes **5** is shown in FIG. 4. To facilitate disposal or replacement of the monolayer and its substrate in this system, the monolayer chip preferably is designed to be plugged into and to be unplugged from the system.

Suitable light sources to generate the intense fluorescent-excitation light include lasers, incandescent light, or microdischarge. Examples of lasers include diode lasers and vertical-cavity surface-emitting lasers (VSCEL). However, lasers are expensive and relatively difficult to miniaturize and integrate into a microsystem. Incandescent light sources may also be difficult to miniaturize. Accordingly, the preferred light source is microdischarge, which is illustrated in FIG. 5. The light source may be a single source or an array. To facilitate disposal or replacement of the light source in this system, the light source preferably is designed as a chip to be plugged into and to be unplugged from the system.

Fluorescence occurs when a molecule absorbs photons from the ultraviolet or visible light spectrum (wavelengths generally in 200-900nm range), and then emits photons rapidly, typically in nanoseconds or less. The emission wavelength is always longer than the excitation wavelength because of some energy loss within the molecule to heat or vibration. Fluorescent dyes generally have a detectable emission intensity over a broad excitation range. The normalized fluorescence emission spectra of fluorescent dyes are generally independent of the excitation wavelength, which makes microdischarge light sources suitable for fluorescent excitation as long as the microdischarge provides photons in a broad excitation range. The maximum fluorescent emission generally occurs at a unique emission wavelength for each dye regardless of the excitation intensity wavelength. However, at a given excitation intensity, different excitation wavelengths produce different maximum emission intensities. There is an optimum excitation wavelength range for each dye. Therefore, for the best efficiency or sensitivity, it is preferable to design/select a light source which provides photons mainly around the optimum excitation wavelength range. It is possible to design a microdischarge light source for the optimum excitation wavelength range, for example, by filling the discharge region with certain gases/vapors at certain pressures. Other examples would be within the ken of the skilled artisan.

FIG. 5 is a schematic view of a microdischarge light source. A high voltage, e.g., 10-300 volts is applied between the closely-spaced electrodes **8** and **9**, thereby producing discharge **10** and strong light **11** through an optical aperture **12**. An array of microdischarge light sources is microfabricated to correspond to the micro/mini channels beneath the SAM and is placed under the micro/mini channels. The discharge electrode pair may face each other vertically, as shown in FIG. 5, or may be located on the same surface and spaced closely. Many microdischarge configurations other than the one shown in FIG. 5 are possible, utilizing the concept of closely spaced electrodes for producing microdischarge under a high intensity electric field. Depending on noise requirements, a filter may be used to filter out the discharge

light in the fluorescence wavelength range.

One shortcoming of microdischarge light source is that its light intensity and spectrum are not constant. However, this is not a problem for the system of the present invention, wherein only the fluorescent intensity may not be constant, and the normalized fluorescent spectrum is generally unaffected by variation in intensity of the light source. The wavelengths of the excited fluorescence are independent of the excitation light as long as the photon energy of the source light is large enough for excitation.

The primary substrate for the light source is preferably silicon. The two electrodes (cathode and anode) are formed from materials including metals or doped polysilicon. The discharge voltage may be reduced significantly by controlling the distance between the two electrodes to within several microns. This distance is achieved easily using a sacrificial layer such as a layer of silicon dioxide or certain metals.

The resulting reflected light from the illuminated monolayer is a combination of the reflection of the light from the source and from fluorescence. A light processor fitted with a grating is used to isolate the source light from the fluorescence and to expand the fluorescence into a spatial spectrum. The grating is preferably a blazed grating. The grating diffracts a major portion of incident light into one of its non-zero-th diffraction orders, and the diffracted light is expanded into a spatial spectrum.

The principles of operation and equations for using a grating are known to the art. The direction of diffracted light is governed by equation (1)

$$m\lambda = d(\sin\theta - \sin\theta_o) \qquad (1)$$

where $\theta_o$ is the incident angle, $\theta$ is the diffraction angle, $\lambda$ is the wavelength, m is the diffraction order, and d is the grating period on the grating surface (e.g., for the blazed grating of FIG. 7, d is the spacing between adjacent grooves). Additional detailed equations that are specific for blazed gratings are also known to the art. See, for example, the text Diffraction Gratings by M.C. Hutley, Academic Press, 1982, the contents of which are hereby incorporated by reference.

The parameters for use in equation (1) are illustrated in FIG. 7. The incident light beams are depicted as arrows 17. The diffraction beams are depicted as arrows 19. Groove normal is represented by dotted line 18. Grating normal is represented by dotted line 20.

Using the grating, the fluorescence spectrum is separated effectively from the source spectrum. FIG. 6 is a schematic view of a light processor equipped with a blazed grating. Fluorescent light is isolated from incident light **14**, which is a combination of fluorescent light and source light, and expanded into a fluorescent spectrum **15** by the blazed grating **13.** The fluorescent light is then detected by photodetector array **16** (PDA).

With the processor shown in FIG. 6, the intensity of the resulting light which passes through the non-grating regions may also be measured. The measured intensity is useful as a reference of intensity. The blazed grating structure is made by precision micromachining or by etching of glass or a polymer. If etching is used, special photoresist profiles, and therefore special masks, are needed. Special masks include transmission-modulated masks. Exposure light passes the mask to photoresist in a gradually-changing intensity profile in the locations of the grating lines. Suitable detectors include arrays of miniature photo sensors, charged coupled devices (CCDs), or photomultiplier sensor arrays depending on sensitivity and resolution requirements.

Since no lenses and mirrors are used in this optical system, strict alignment and spacing are not required in the assembly of the system. However, when an array of light sources is used, an alignment between the micro/minichannel chip and the light-source may be necessary. When the light source is a chip, alignment may be achieved, for example, by aligned silicon-glass anodic bonding or silicon-polymer-glass bonding.

The microsystem of the present invention offers many advantages compared to conventional optical detection systems. Conventional optical detection benches tend to be bulky and expensive. By contrast, the miniaturized system is less expensive, is compact, requires smaller amounts of samples, and is easy to use. These advantages are especially useful and important for self-monitoring of glucose by diabetic patients.

The invention will now be illustrated by the following non-limiting examples.

Example 1

A fluorescent compound of formula II wherein n and m are each 1 and p is 2 is prepared according to the synthetic route shown in FIG. 1 and FIG 2: first, the phenylboronic anhydride of formula 1 is prepared as follows: orthobromotoluene is reacted with magnesium (1.1 equivalents) in diethylether at 25.degree. C. Grignard reagent is added dropwise to a solution of trimethylborate (10 equivalents) in diethylether at -78°C. The mixture is stirred further for 2 hours, then allowed to warm to room temperature, and stirred further for 2 hours. The diethylether is removed under reduced pressure, and the solid recrystallized from water. The product phenylboronic acid is dried in a vacuum oven

overnight to produce phenylboronic anhydride.

The phenylboronic anhydride is mixed with NBS (N-bromosuccinimide) (1.1 equivalents) and catalytic AIBN (azoisobutylnitrile) in carbon tetrachloride as a solvent. The mixture is refluxed under radiation by a 200 Watt lamp for 2 hours. The solution is filtered when hot and the solvent removed to yield the desired bromomethylboronic anhydride of formula 2.

The bromomethylboronic anhydride is mixed with 9-methylaminomethyl-10-hydroxyethylanthracene (3) (2.1 equivalents) in chloroform and refluxed for 2 hours. The mixture is filtered when cool and the solvent is removed. The solid is then washed with diethylether and recrystallized from ethyl acetate, to give the product of formula **4**.

Compound **4** is treated with a 25 per cent excess of aqueous (48%) hydrobromic acid together with sulfuric acid. The mixture is refluxed for several hours. The water-insoluble layer is separated; washed successively with water, cold concentrated sulfuric acid, and sodium carbonate solution; separated; dried with calcium chloride; and distilled to give the corresponding bromide of formula **5**.

A mixture of 95% ethanol and thiourea is brought to reflux temperature on a steam bath. The steam is turned off and compound **5** is added in one portion. Within 5 minutes a vigorous reaction ensues and the isothiuronium bromide salt of **5** separates from solution. The exothermic reaction is allowed to continue to completion without further application of heat. The isothiuronium bromide salt is collected by filtration and dried. A mixture of the isothiuronium bromide salt and 85% potassium hydroxide in water is boiled under reflux for 5 hours. The flask is then equipped with a separatory funnel, a gas-inlet tube, and a condenser for steam distillation. Nitrogen is admitted through the inlet tube, and a cooled solution of sulfuric acid in water is added dropwise. The addition is continued until the reaction mixture becomes acid to Congo red paper, and then a 20% excess of acid is added. At the end of the addition of acid, the passage of nitrogen is discontinued and steam is admitted through the inlet tube. The oil is separated from the water in the distillate and dried over calcium chloride. The crude product is fractionated through a 10-inch Vigreux column under reduced pressure in an atmosphere of nitrogen to yield the compound of formula II.

Example 2

The self-assembled monolayer of the compound of formula II is prepared by immersing a micropatterned gold chip into a solution of the compound of formula II for 15 hours. The concentration of the solution is 1.0mM in THF: methanol 9:1 as solvent. The immobilization process is monitored by SPR spectroscopy. After SAM formation, the chip is rinsed with methanol and then dried under nitrogen.

A Superslip® microscope glass coverslip is used as the substrate of the gold chip. The coverslip is cleaned in Piranha solution (30% $H_2O_2$:concentrated $H_2SO_4$ 1:3) for 15 seconds and rinsed carefully with Milli-Q® grade water. The coverslip is then dried in a nitrogen stream and placed in a vacuum evaporator. Gold film (about 50 nm thickness) is deposited on the coverslip using a Polaron E5000 sputter coating system. The sputter coating system is maintained under conditions of 2.0 x $10^{-2}$ mbar and 20 mA for 180 seconds.

References

1. S. Takahashi, et al., Analytical Sciences 2004, 20, 757-759.

2. H. Murakami, et al., Chemistry Letters 2000, 940-941.

3. D. Huh, et al., Engineering in Medicine and Biology, 2002, 24th Annual Conference and the Annual Fall Meeting of the Biomedical Engineering Society EMBS/BMES Conference, 2002, Proceedings of the Second Joint Meeting, Volume 2, Oct. 2002, 1642-1643.


All patents and publications referenced or mentioned herein are indicative of the levels of skill of those skilled in the art to which the invention pertains, and each such referenced patent or publication is hereby incorporated by reference to the same extent as if it had been incorporated by reference in its entirety individually or set forth herein in its entirety. Applicants reserve the right to incorporate physically into this specification any and all materials and information from any such cited patents or publications.

The specific methods and compositions described herein are representative of preferred embodiments and are exemplary and not intended as limitations on the scope of the invention. Other objects, aspects, and embodiments will occur to those skilled in the art upon consideration of this specification, and are encompassed within the spirit of the invention as defined by the scope of the claims. It will be readily apparent to one skilled in the art that varying substitutions and modifications may be made to the invention disclosed herein without departing from the scope and spirit of the

invention.

The invention described illustratively herein suitably may be practiced in the absence of any element or elements, or limitation or limitations, which is not specifically disclosed herein as essential. The methods and processes described illustratively herein suitably may be practiced in differing orders of steps, and that they are not necessarily restricted to the orders of steps indicated herein or in the claims. As used herein and in the appended claims, the singular forms "a," "an," and "the" include plural reference unless the context clearly dictates otherwise. Thus, for example, a reference to "a detector" or "a patient" includes a plurality of such detectors or patients, and so forth. Under no circumstances may the patent be interpreted to be limited to the specific examples or embodiments or methods specifically disclosed herein. Under no circumstances may the patent be interpreted to be limited by any statement made by any Examiner or any other official or employee of the Patent and Trademark Office unless such statement is specifically and without qualification or reservation expressly adopted in a responsive writing by Applicants.

The terms and expressions that have been employed are used as terms of description and not of limitation, and there is no intent in the use of such terms and expressions to exclude any equivalent of the features shown and described or portions thereof, but it is recognized that various modifications are possible within the scope of the invention as claimed. Thus, it will be understood that although the present invention has been specifically disclosed by preferred embodiments and optional features, modification and variation of the concepts herein disclosed may be resorted to by those skilled in the art, and that such modifications and variations are considered to be within the scope of this invention as defined by the appended claims.

The invention has been described broadly and generically herein. Each of the narrower species and subgeneric groupings falling within the generic disclosure also forms part of the invention. This includes the generic description of the invention with a proviso or negative limitation removing any subject matter from the genus, regardless of whether or not the excised material is specifically recited herein.

## Claims

1. An integrated microfluidic fluorescence detection system for detection of an analyte which comprises:

    a light source;
    a self-assembled monolayer coated on a gold surface, wherein the self-assembled monolayer is a self-assembled monolayer of a compound of the formula I

    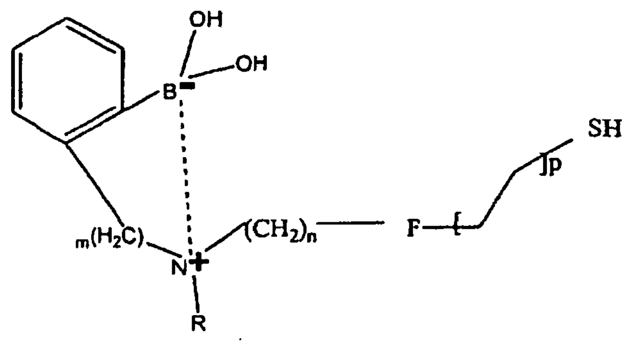

    (I)

    wherein F designates a fluorophore that fluoresces in the presence of the analyte R is or an aromatic group, n and m are each 0, 1, or 2, n+m is the integer 2 or 3, p is an integer of 1 to 30, and
    the moieties $[CH_2CH_2]_p$ and the benzene ring attached to the boron atom are substituted or unsubstituted;
    a light processor; and
    a detector.

2. The system of claim 1 wherein the components are assembled into a portable device.

3. The system of claim 1 wherein the light source is laser light, incandescent light, or microdischarge.

4. The system of claim 1 wherein the detector is selected from the group consisting of arrays of miniature photo sensors, charged coupled devices, and photomultiplier sensor arrays.

**5.** The system of claim 1 wherein p is an integer of 12 to 30.

**6.** The system of claim 1 wherein p is an integer of 15 to 30.

**7.** A method of detecting a saccharide in a biological sample, the method comprising the steps of

(a) detection with an integrated microfluidic fluorescence detection system which comprises:

a light source;
a self-assembled monolayer coated on a gold surface; wherein the self-assembled monolayer comprises fluorophores that fluoresce in the presence of the analyte;
a light processor; and
a detector,
wherein the self-assembled monolayer is formed on a gold surface with a compound of formula I:

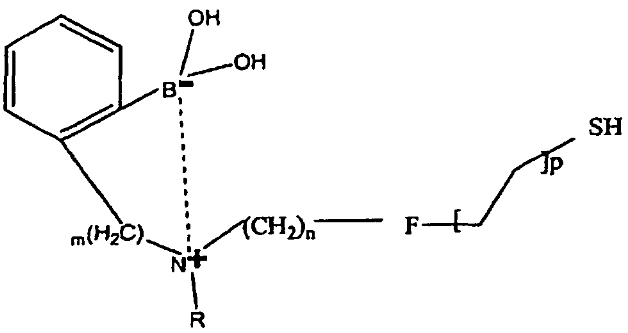

(I)

wherein
F designates a fluorophore, R is an alkyl group having 1 to 4 carbon atoms or an aromatic group, n and m are each 0, 1, or 2, n+m is the integer 2 or 3, p is an integer of 1 to 30, and the moieties $[CH_2CH_2]_p$ and the benzene ring attached to the boron atom are substituted or unsubstituted, and wherein
a bio-fluid containing or potentially containing a saccharide is delivered to the monolayer surface via microchannels or minichannels situated beneath the monolayer surface; and

(b) detecting fluorescence with said detector, wherein the fluorescence is indicative of the presence of or the amount of the saccharide in the biological sample. 7

**8.** The method of claim 7 wherein the saccharide is D-glucose or D-fructose.

**9.** The method of claim 8 wherein the saccharide is D-glucose.

**10.** The method of claim 7 wherein p is an integer of 12 to 30.

## Patentansprüche

**1.** Integriertes mikrofluidisches Fluoreszenz-Erkennungssystem für die Erkennung eines Analyten, welches umfasst eine Lichtquelle;
eine auf eine Goldoberfläche aufgetragene selbstanordnende Einzelschicht, wobei die selbstanordnende Einzelschicht eine selbstanordnende Einzelschicht aus einer Verbindung der Formel I

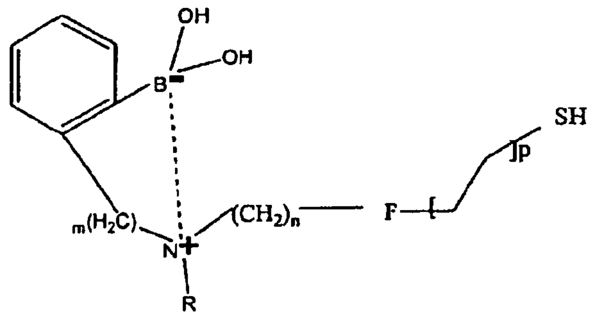

(I)

ist,

wobei F ein Fluorophor bezeichnet, das in der Anwesenheit des Analyten fluoresziert, R eine Alkylgruppe mit 1 bis 4 Kohlenstoffatomen oder eine aromatische Gruppe ist, n und m jeweils 0, 1 oder 2 sind, n+m die Ganzzahl 2 oder 3 ist, p eine Ganzzahl von 1 bis 30 ist und die Reste $[CH_2CH_2]_p$ und der an das Boratom gebundene Benzolring substituiert oder nicht substituiert sind;
einen Lichtprozessor; und
einen Detektor.

2. System gemäß Anspruch 1, wobei die Bestandteile zu einer tragbaren Vorrichtung zusammengesetzt sind.

3. System gemäß Anspruch 1, wobei die Lichtquelle ein Laserlicht ist, ein Glühlicht, oder eine Mikroentladung.

4. System gemäß Anspruch 1, wobei der Detektor ausgewählt ist aus der Gruppe Anordnungen von Miniaturphotosensoren, ladungsgekoppelte Vorrichtungen und Anordnungenen von Photomultiplikatorsensoren.

5. System gemäß Anspruch 1, wobei p eine Ganzzahl von 12 bis 30 ist.

6. System gemäß Anspruch 1, wobei p eine Ganzzahl von 15 bis 30 ist.

7. Erfassungsverfahren für ein Saccharid in einer biologischen Probe, das Verfahren umfassend die Schritte

(a) Erfassung mit einem integrierten mikrofluidischen Fluoreszenz-Erkennungssystem, welches umfasst
eine Lichtquelle;
eine auf eine Goldoberfläche aufgetragene selbstanordnende Einzelschicht; wobei die selbstanordnende Einzelschicht Fluorophoren umfasst, die in der Anwesenheit des Analyten fluoreszieren;
einen Lichtprozessor; und
einen Detektor,
wobei die selbstanordnende Einzelschicht gebildet ist aus einer Verbindung der Formel I

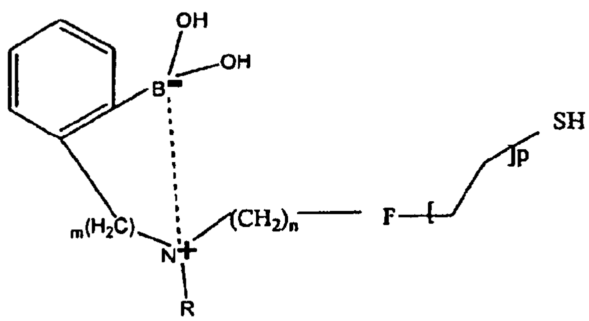

(I),

wobei
F ein Fluorophor bezeichnet, R eine Alkylgruppe mit 1 bis 4 Kohlenstoffatomen oder eine aromatische Gruppe ist, n und m jeweils 0, 1 oder 2 sind, n+m die Ganzzahl 2 oder 3 ist, p eine Ganzzahl von 1 bis 30 ist und die Reste $[CH_2CH_2]_p$ und der an das Boratom gebundene Benzolring substituiert oder nicht substituiert sind, und wobei
ein ein Sachharid enthaltendes oder möglicherweise enthaltendes Biofluid der Einzelschichtoberfläche über sich unter der Einzelschichtoberfläche befindende Mikrokanäle zugeführt wird; und
(b) Erfassung von Fluoreszenz mit dem Detektor, wobei die Fluoreszenz die Anwesenheit oder die Menge des Saccharids in der biologischen Probe anzeigt.

**8.** Verfahren gemäß Anspruch 7, wobei das Saccharid D-Glucose ist oder D-Fructose.

**9.** Verfahren gemäß Anspruch 8, wobei das Saccharid D-Glucose ist.

**10.** Verfahren gemäß Anspruch 7, wobei p eine Ganzzahl von 12 bis 30 ist.

**Revendications**

**1.** Un système de détection de fluorescence microfluidique intégré destiné à la détection d'un analyte qui comprend :

une source de lumière ;
une monocouche auto-assemblée enduite sur une surface d'or, où la monocouche auto-assemblée est une monocouche auto-assemblée d'un composé de la formule I

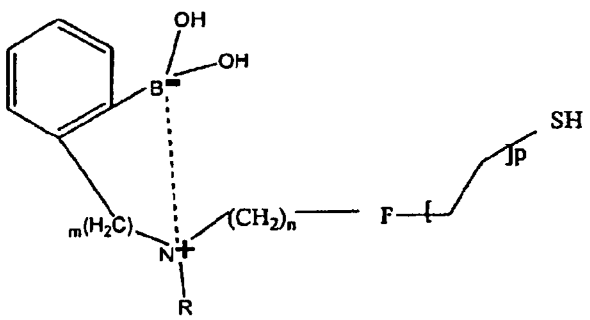

(I)

où F désigne un fluorophore qui est fluorescent en présence de l'analyte, R est un groupe alkyle possédant de 1 à 4 atomes de carbone ou un groupe aromatique, n et m sont chacun 0, 1 ou 2, n+m est l'entier 2 ou 3, p est un entier de 1 à 30, et les fractions $[CH_2CH_2]_p$ et l'anneau de benzène attachés à l'atome de bore sont substitués ou non substitués ;
un processeur de lumière ; et
un détecteur.

**2.** Le système selon la revendication 1 où les composants sont assemblés en un dispositif portatif.

**3.** Le système selon la revendication 1 où la source de lumière est une lumière laser, une lumière incandescente ou une microdécharge.

**4.** Le système selon la revendication 1 où le détecteur est sélectionné dans le groupe se composant de réseaux de photocapteurs miniatures, de dispositifs à couplage de charge et de réseaux de capteurs photomultiplicateurs.

**5.** Le système selon la revendication 1 où p est un entier de 12 à 30.

**6.** Le système selon la revendication 1 où p est un entier de 15 à 30.

**7.** Un procédé de détection d'un saccharide dans un échantillon biologique, le procédé comprenant les opérations suivantes :

(a) la détection avec un système de détection de fluorescence microfluidique intégré qui comprend :

une source de lumière ;
une monocouche auto-assemblée enduite sur une surface d'or, où la monocouche auto-assemblée comprend des fluorophores qui sont fluorescents en présence de l'analyte ;
un processeur de lumière ; et
un détecteur,
où la monocouche auto-assemblée est formée sur une surface d'or avec un composé de la formule I

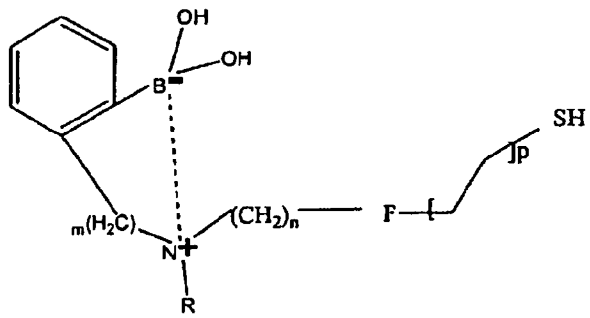

(I)

où
F désigne un fluorophore, R est un groupe alkyle possédant de 1 à 4 atomes de carbone ou un groupe aromatique, n et m sont chacun 0, 1 ou 2, n+m est l'entier 2 ou 3, p est un entier de 1 à 30, et les fractions $[CH_2CH_2]_p$ et l'anneau de benzène attachés à l'atome de bore sont substitués ou non substitués, et où un bio-fluide contenant ou contenant potentiellement un saccharide est fourni à la surface monocouche par l'intermédiaire de microcanaux ou minicanaux situés sous la surface monocouche, et

(b) la détection de la fluorescence avec ledit détecteur, où la fluorescence est indicative de la présence de ou de la quantité de saccharide dans l'échantillon biologique.

**8.** Le procédé selon la revendication 7 où la saccharide est D-glucose ou D-fructose.

**9.** Le procédé selon la revendication 8 où la saccharide est D-glucose.

**10.** Le procédé selon la revendication 7 où p est un entier de 12 à 30.

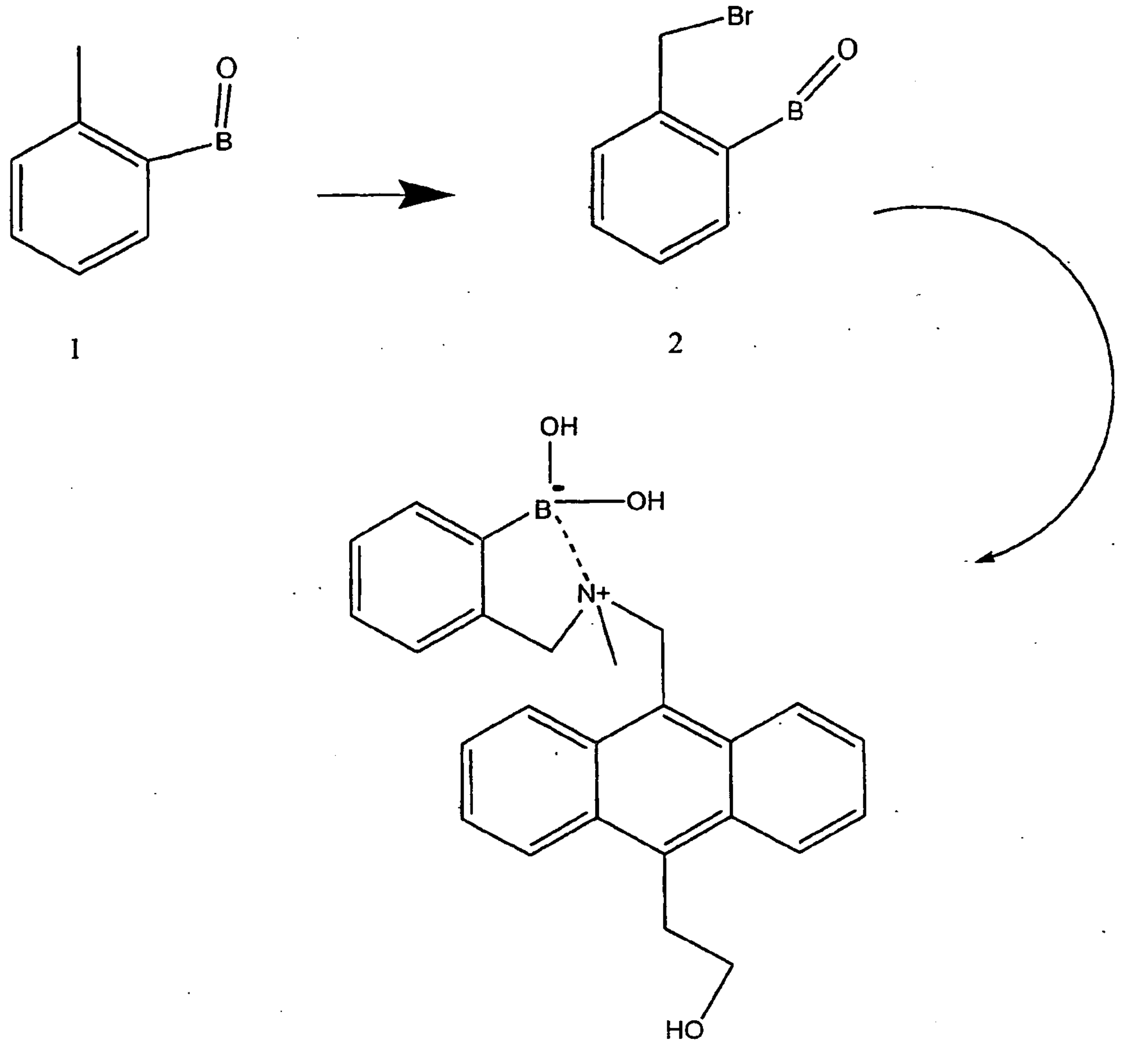

I

2

3

4

FIG. 1

4

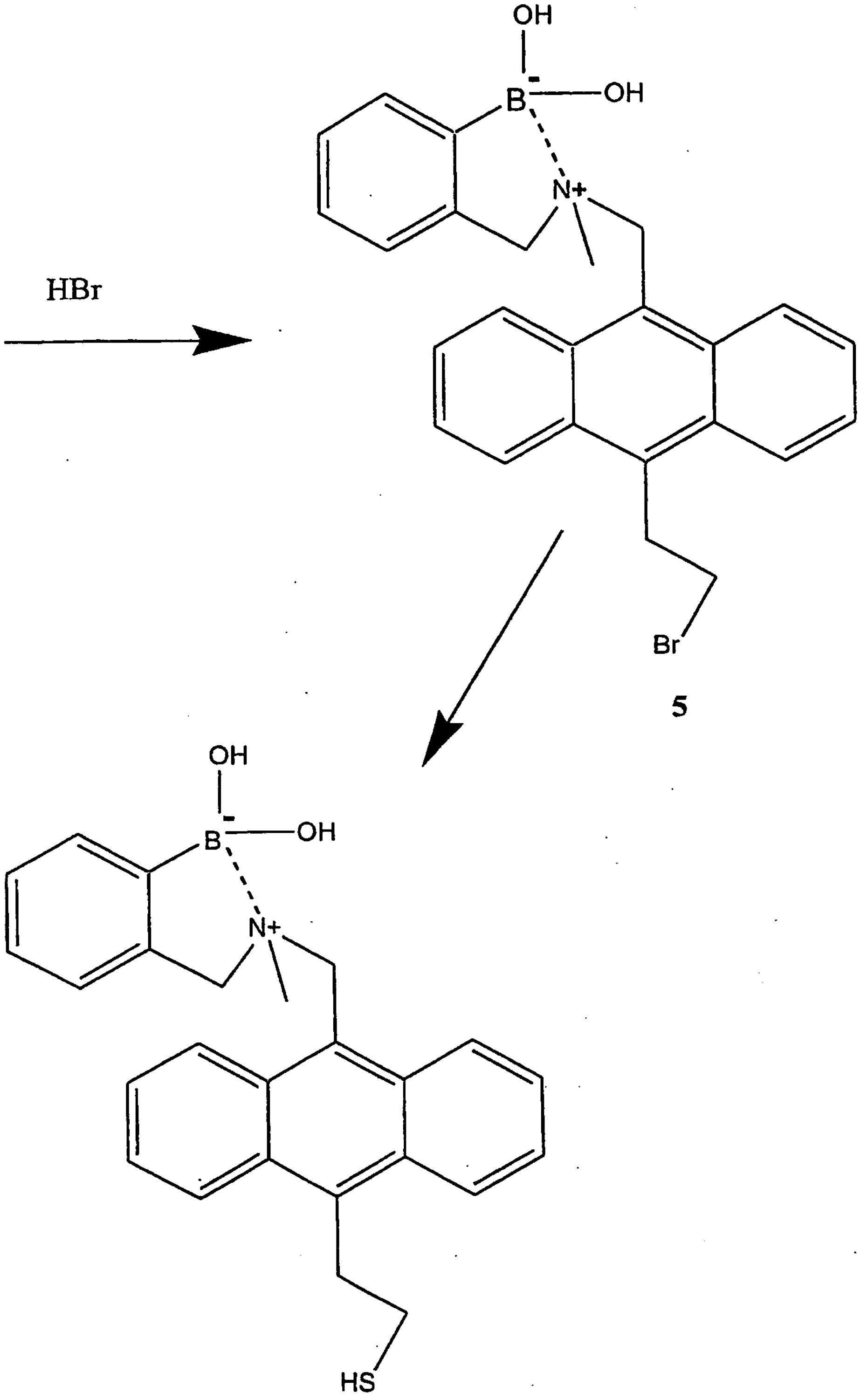


5

(II)

FIG. 2

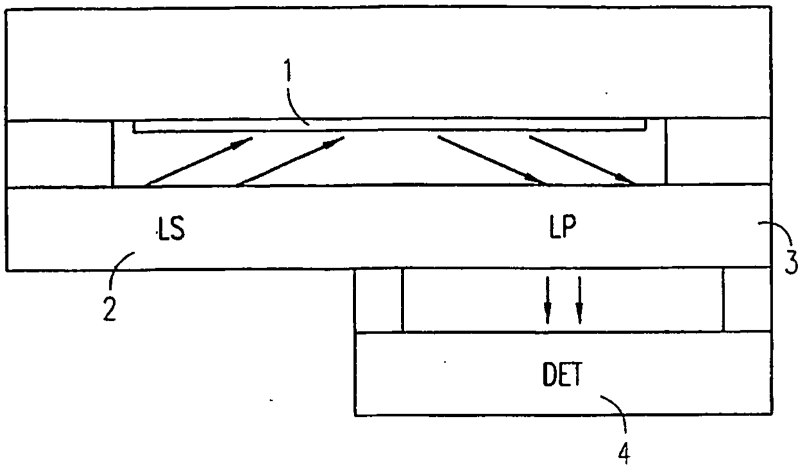


FIG. 3

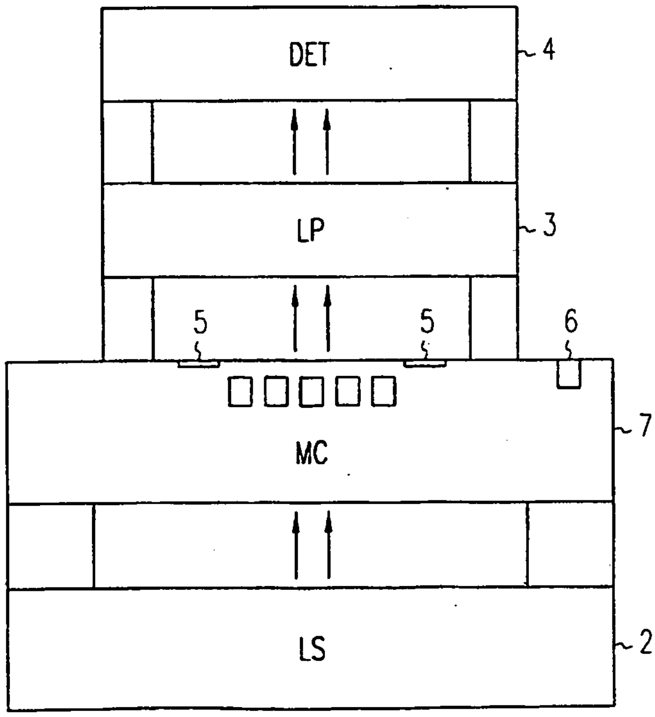


FIG. 4

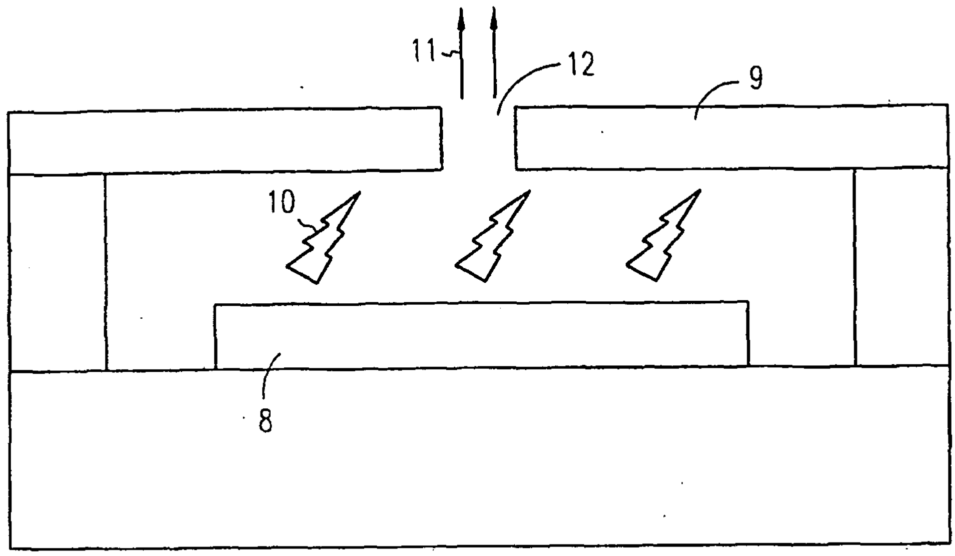


FIG. 5

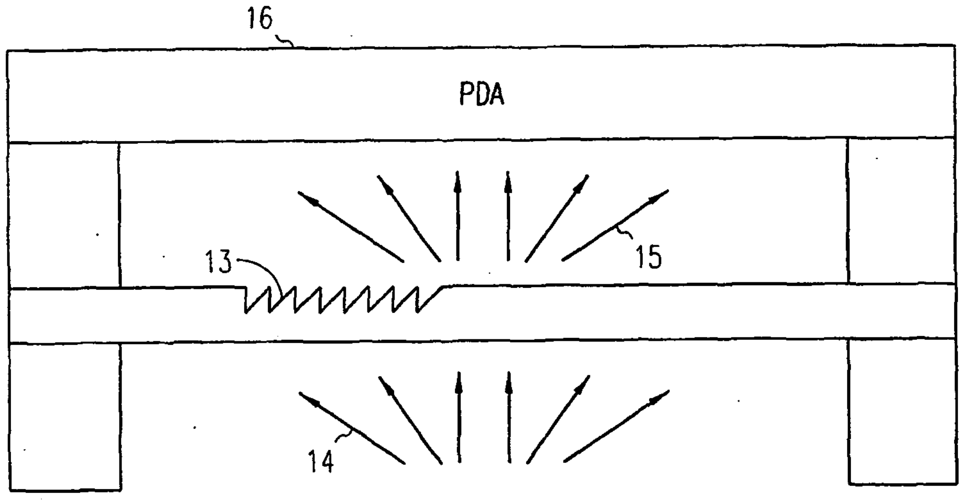


FIG. 6

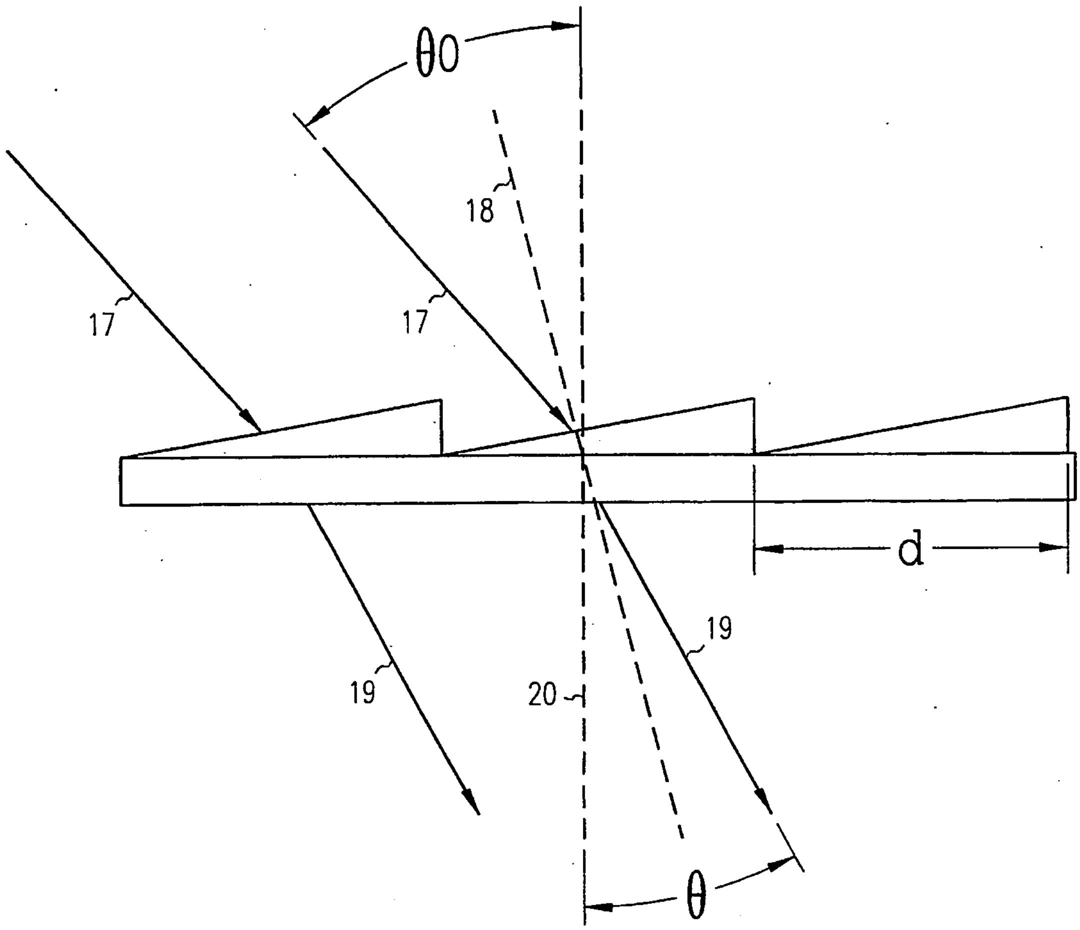


FIG. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2005065241 A
- US 20020193672 A


### Non-patent literature cited in the description


- **M.C. HUTLEY.** Diffraction Gratings. Academic Press, 1982
- **S. TAKAHASHI et al.** *Analytical Sciences,* 2004, vol. 20, 757-759
- **H. MURAKAMI et al.** *Chemistry Letters,* 2000, 940-941
- **D. HUH et al.** Engineering in Medicine and Biology, 2002, 24th Annual Conference and the Annual Fall Meeting of the Biomedical Engineering Society EMBS/BMES Conference, 2002. *Proceedings of the Second Joint Meeting,* October 2002, vol. 2, 1642-1643